(19) Europäisches Patentamt
European Patent Office
Office européen des brevets

(11) Veröffentlichungsnummer: **0 164 425**
**A1**

(12) # EUROPÄISCHE PATENTANMELDUNG

(21) Anmeldenummer: **84106498.3**

(22) Anmeldetag: **07.06.84**

(51) Int. Cl.[4]: **C 08 G 65/32**
C 08 G 4/00, C 11 D 1/72
B 01 F 17/42

(43) Veröffentlichungstag der Anmeldung:
**18.12.85 Patentblatt 85/51**

(84) Benannte Vertragsstaaten:
**CH FR GB LI NL SE**

(71) Anmelder: **Heiss, Bernhard Rudolf**
**Widenmayerstrasse 41**
**D-8000 München 22(DE)**

(72) Erfinder: **Heiss, Lorenz, Dr.**
**Stormstrasse 39**
**D-6238 Hofheim a. Ts.(DE)**

(54) **Grenzflächenaktive Polyglykolätheracetale.**

(57) Polyglykoletheracetale der Formel

$$RO\left[(C_2H_4O)_x-\underset{R_1}{\underset{|}{C}}H-O\right]_z(C_2H_4O)_y-R_2$$

worin R und $R_2$ Wasserstoff, $C_5$-$C_{30}$-, vorzugsweise $C_8$-$C_{18}$-Alkyl, Aryl oder Aralkyl mit jeweils insgesamt 6 bis 30, vorzugsweise 6 bis 20 C-Atomen, $R_1$ $C_2$-$C_{20}$-Alkyl oder $C_6$-$C_{20}$-Alkylaryl, x und y eine ganze Zahl von 5 bis 20 und z für den Fall R und $R_2$ = H eine ganze Zahl von 1 bis 10, in den übrigen Fällen die Zahl 1 bedeuten. Diese Acetale, die nach dem üblichen Verfahren aus einem Aldehyd und Alkoholen hergestellt werden, eignen sich als Tenside.

EP 0 164 425 A1

Grenzflächenaktive Polyglykolätheracetale

Aus Tenside Detergents 15 (1978), S. 68-71 sind bereits Acetale aus aliphatischen Aldehyden und Polyethylenglykolmonoalkylethern bekannt, die im Molekül insgesamt 3 bis 8 C-Atome enthalten. In EP-A 54 366 sind Acetale beschrieben aus $C_{12}$-$C_{20}$-aliphatischen Aldehyden und $C_1$-$C_4$ - Monoalkylethern von Polyalkylenoxiden mit 1 bis 15 Alkylenoxid-Gruppen.

Gegenstand der Erfindung sind neue grenzflächenaktive Polyglykoletheracetale der Formel

$$RO\left[(C_2H_4O)_x-\underset{\displaystyle R_1}{\underset{|}{CH}}-O\right]_z(C_2H_4O)_y-R_2$$

worin R und $R_2$ Wasserstoff, $C_5$-$C_{30}$-, vorzugsweise $C_8$-$C_{18}$-Alkyl, Aryl oder Alkylaryl mit jeweils insgesamt 6-30, vorzugsweise 6-20 C-Atomen, $R_1$ $C_2$-$C_{20}$-Alkyl oder $C_6$-$C_{20}$-Alkylaryl, x und y eine ganze Zahl von 5 bis 20 und Z für den Fall R und $R_2$ = H eine ganze Zahl von 1 bis 10, in den sonstigen Fällen die Zahl 1 bedeuten. Die Polyglykoletheracetale der obigen Formel werden hergestellt, indem man Alkohole der Formel

$$RO-(C_2H_4\ O)_xH \quad \text{bzw.} \quad R_2O(C_2H_4O)_yH$$

mit einem Aldehyd der Formel

$$R_1-CHO$$

in einem Lösemittel und in Gegenwart von Säuren als Katalysatoren erhitzt und das Reaktionswasser auskreist. Vorzugweise wird die Reaktion bei der Siedetemperatur des Lösemittels durchgeführt und das Reaktionswasser wird durch azeotrope Destillation entfernt. Als Säuren verwendet man

beispielsweise Schwefelsäure, p-Toluolsulfonsäure oder Wasserstoff-Ionenaustauscher in einer Konzentration von 0,5 bis 2 %. Man benötigt auf ein Mol Aldehyd zwei alkoholische Hydroxylgruppen, wobei es vorteilhaft ist, einen Überschuß an Aldehyd zu nehmen, um einen quantitativen Umsatz zum Acetal zu erhalten.

Für die den erfindungsgemäßen Acetalen zugrunde liegenden Aldehyde seien beispielsweise Propionaldehyd, n-Butyraldehyd, Valeraldehyd, 2-Äthylhexylaldehyd, Isooctylaldehyd, Isononaldehyd, Isotridecylaldehyd, Benzaldehyd, Tolylaldehyd genannt, während für die entsprechenden Alkohole Polyäthylenglykole vom Molgewicht 200 bis 2000, lineare oder verzweigte Fettalkohole mit 5 bis 30 Kohlenstoffatomen und 5 bis 20 Äthylenoxydgruppen sowie Phenol, Naphthol und Alkylphenole mit 6 bis 30 C-Atomen in Frage kommen.

Die neuen grenzflächenaktiven Polyglykolätheracetale sind vielfältig einsetzbare Tenside beispielsweise als Netzmittel, Färbereihilfsmittel, Emulgatoren und Demulgatoren, wie sie bei der Erdölförderung als Spalter von Erdölemulsionen Verwendung finden. Als Schwachschäumer mit vollständiger biologischer Abbaubarkeit können sie vor allem als alkalistabile Reiniger und Spülmittel Verwendung finden.

Beispiel 1

60 g (0,3 Mol) Isotridecylaldehyd und 136 g (0,34 Mol) Ethylenglykolpolyglykolether vom Molgewicht 400 werden zusammen mit 10 g stark saurem Kationenaustauscher in der $H^+$-Form in 300 ml Toluol unter Rückfluß erhitzt und dabei durch azeotrope Destillation das Reaktionswasser (5,4 g) ausgekreist.

Man erhält nach Filtration vom Kationenaustauscher und Entfernung des Lösungsmittels in fast quantitativer Ausbeute 174 g des Acetals des Isotridecylaldehyds und des Ethylenglykolpolyglykolethers folgender Konstitution:

$$HO-\left[(C_2H_4O)_9-\underset{C_{12}H_{25}}{\underset{|}{CH}}-O\right]_6-(C_2H_4O)_9-H$$

Die osmometrische Molgewichtsbestimmung ergab ein Mol von 3400 (das theoretische Mol 3670). Der als Acetal gebundene Isotridecylaldehyd betrug 36 % (Theorie 37,8 %).

Beispiel 2

23,4 g (0,165 Mol) Isononylaldehyd und 154 g (0,3 Mol) Isotridecyl-polethylenglykolether mit 8 Äthylenoxydgruppen vom Molgewicht 515 werden zusammen mit 5,2 g (0,03 Mol) p-Toluolsulfosäure in 300 ml Toluol unter Rückfluß erhitzt und dabei durch azeotrope Destillation das Reaktionswasser (5,4 g) ausgekreist. Mit 1,6 g Natriummethylat neutralisiert man, filtriert und entfernt das Lösungsmittel. Man erhält in fast quantitativer Ausbeute 170 g des Acetals des Isononylaldehyds und des Isotridecylalkoholaddukts mit 8 Ethylenoxydgruppen folgender Konstitution:

$$C_{13}H_{27}O-(C_2H_4O)_8-\underset{C_8H_{17}}{\underset{|}{CH}}-(OC_2H_4)_8-OC_{13}H_{27}$$

Der als Acetal gebundene Isononylaldehyd beträgt 11,2 % (Theorie 12,3 %),

Beispiel 3

128 g (0,2 Mol) Isotridecyl-polyethylenglykolether mit acht Ethylenoxydgruppen vom Molgewicht 1280 und 28,8 (0,4 Mol) n-Butyraldehyd werden in 300 ml Methylenchlorid zusammen mit 20 g stark saurem Kationenaustauscher in der $H^+$-Form unter Rückfluß erhitzt und durch azeotrope Destillation das Reaktionswasser entfernt. Man erhält nach Filtration vom Kationenaustauscher und Entfernung des Lösungsmittels quantitativ 133 g des Butyrals aus dem Isotridecanoladdukt mit acht Äthylenoxydgruppen der Formel:

$$C_{13}H_{27}O-(C_2H_4O)_8-\underset{C_3H_7}{\underset{|}{CH}}-(OC_2H_4)_8-OC_{13}H_{27}$$

Der als Acetal gebundene n-Butyraldehyd beträgt 5,4 (Theorie 5,5 %).

Beispiel 4

145 g (0,2 Mol) Isotridecyl-polyethylenglykolether mit 12 Ethylenoxydgruppen und 11,7 g (0,11 Mol) Benzaldehyd werden in 300 ml Toluol zusammen mit 20 g stark saurem Kationenaustauscher in der $H^+$-Form unter Rückfluß erhitzt und durch azeotrope Destillation das Reaktionswasser entfernt. Man erhält nach Filtration und Entfernung des Lösungsmittels 152 g des Acetals aus Benzaldehyd und dem Isotridecanoladdukt mit Ethylenoxydgruppen der Formel:

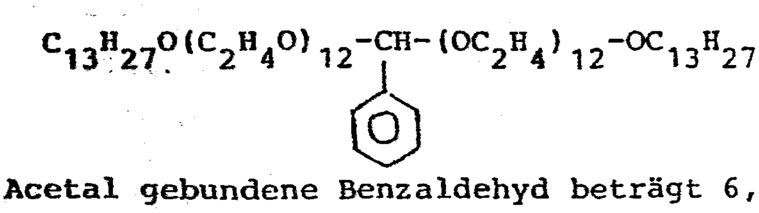

Der als Acetal gebundene Benzaldehyd beträgt 6,5 % (Theorie 6,9 %).

Patentansprüche:

1. Polyglykoletheracetale der Formel

$$RO\left[(C_2H_4O)_x-\underset{R_1}{CH}-O\right]_z(C_2H_4O)_y-R_2$$

worin R und $R_2$ Wasserstoff, $C_5$-$C_{30}$-, vorzugsweise $C_8$-$C_{18}$-Alkyl, Aryl oder Aralkyl mit jeweils insgesamt 6 bis 30, vorzugsweise 6 bis 20 C-Atomen, $R_1$ $C_2$-$C_{20}$-Alkyl oder $C_6$-$C_{20}$-Alkylaryl, x und y eine ganze Zahl von 5 bis 20 und z für den Fall R und $R_2$ = H eine ganze Zahl von 1 bis 10, in den übrigen Fällen die Zahl 1 bedeuten.

2. Verfahren zur Herstellung der Polyglykoletheracetale nach Anspruch 1, dadurch gekennzeichnet, daß man Alkohole der Formel

$$RO-(C_2H_4O)_xH \text{ bzw. } R_2O-(C_2H_4O)_yH$$

mit einem Aldehyd der Formel

$$R_1-CHO$$

in einem Lösemittel und in Gegenwart von Säuren als Katalysator erhitzt und das Reaktionswasser auskreist.

3. Verwendung der Polyglykoletheracetale nach Anspruch 1 als Tenside.

Europäisches Patentamt

**EUROPÄISCHER RECHERCHENBERICHT**

0164425

Nummer der Anmeldung

EP 84 10 6498

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | TENDISE DETERGENTS, Nr. 4, Juli/August 1981, München; A. SOKOLOWSKI et al. "Surface active acetals obtained from aliphatic aldehydes and monoalkyl ethers of tetraethylene glycol", Seiten 199-201<br>* Seite 199, Spalte 1, Zeile 1 - Spalte 2, Zeile 18 *<br>--- | 1-3 | C 08 G 65/32<br>C 08 G 4/00<br>C 11 D 1/72<br>B 01 F 17/42 |
| D,X | EP-A-0 054 366 (IMPERIAL CHEMICALS INDUSTRIES PLC)<br>* Ansprüche 1,2,4; Beispiele *<br>--- | 1-3 | |
| X | US-A-4 408 084 (W.K. LANGDON)<br>* Spalte 2, Zeilen 27-59; Ansprüche 1,2 *<br>--- | 1-3 | **RECHERCHIERTE SACHGEBIETE (Int. Cl.4)** |
| X | FR-A-1 233 251 (OLIN MATHIESON CHEMICAL CORPORATION)<br>* Zusammenfassung; Seite 2, Spalte 1, Zeilen 12-32 *<br>--- -/- | 1-3 | B 01 F 17/42<br>C 08 G 4/00<br>C 08 G 65/32<br>C 11 D 1/00 |

Der vorliegende Recherchenbericht wurde für alle Patentansprüche erstellt.

| Recherchenort | Abschlußdatum der Recherche | Prüfer |
|---|---|---|
| BERLIN | 24-01-1985 | IDEZ C.G. |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches Patentamt

# EUROPÄISCHER RECHERCHENBERICHT

0164425
Nummer der Anmeldung

EP 84 10 6498

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CHEMICAL ABSTRACTS Band 78, Nr. 18, 7. Mai, 1973 Columbus, Ohio, USA; H. TAKAHASHI et al. "Structural effects on the properties of nonionic surfactants.II.Acetal-type, homogeneous nonionics having poly(oxyethylene) chains terminated with methoxyl group", Seite 99, Spalte 1, Zusammenfassung Nr. 113063b & Bulletin Chem. Soc. Jap., Band 46, Nr. 2, 1973, Seiten 623-626<br>----- | 1-3 | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| BERLIN | 24-01-1985 | IDEZ C.G. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82